# FASCICULE DE BREVET EUROPEEN

(11) **EP 4 161 992 B1**
(45) Date de publication et mention de la délivrance du brevet: **31.07.2024**
(21) Numéro de dépôt: 21739159.8
(22) Date de dépôt: 03.06.2021
(51) Int. Cl.: C08L 9/06, C08L 15/00, C08K 3/36, B60C 1/00

(54) **MELANGE DE CAOUTCHOUC**
KAUTSCHUKZUSAMMENSETZUNG
RUBBER COMPOUND

(30) Priorité: 04.06.2020 FR 2005862
(43) Date de publication de la demande: 12.04.2023
(73) Titulaire: COMPAGNIE GENERALE DES ETABLISSEMENTS MICHELIN, 63040 Clermont-Ferrand (FR)
(72) Inventeur: ARAUJO DA SILVA, José-Carlos, 63040 CLERMONT-FERRAND CEDEX 9 (FR); PRAS, Maxime, 63040 CLERMONT-FERRAND CEDEX 9 (FR); CEREDE, Benoit, 63040 CLERMONT-FERRAND Cedex 9 (FR); PERRIOT, Antoine, 63040 CLERMONT-FERRAND Cedex 9 (FR); DURIEZ, Simon, 63040 CLERMONT-FERRAND Cedex 9 (FR)
(74) Mandataire: M.F.P. Michelin
(86) Numéro de dépôt international: PCT/FR2021/051005
(87) Numéro de publication internationale: WO 2021/245357

(56) Documents cités:
- EP-A1- 3 372 638
- JP-A- H0 827 313

## Description

Le domaine de la présente invention est celui des mélanges de caoutchouc renforcés, notamment utilisées dans la confection de pneumatiques pour véhicules, plus particulièrement utilisés pour la fabrication de bandes de roulement.

Une des exigences requises pour un pneumatique est d'assurer une adhérence optimale sur route, notamment sur sol mouillé. Une façon de conférer au pneumatique une adhérence élevée sur sol mouillé est d'utiliser une composition de caoutchouc dans sa bande de roulement, laquelle composition présente un large potentiel hystérétique. Mais en même temps la bande de roulement de pneumatique doit aussi minimiser sa contribution à la résistance au roulement du pneumatique, c'est à dire être la moins hystérétique possible.

Ainsi, la composition de caoutchouc de la bande de roulement doit-elle satisfaire à deux exigences antinomiques, à savoir présenter un potentiel d'hystérèse maximal pour satisfaire à l'exigence d'adhérence et présenter une hystérèse aussi faible que possible pour satisfaire à l'exigence de résistance au roulement.

L'amélioration de la résistance au roulement a été rendu possible grâce à l'emploi de nouvelles compositions de caoutchouc renforcées de charges inorganiques, en particulier de silices spécifiques du type hautement dispersibles, capable de rivaliser du point de vue renforçant avec un noir de carbone conventionnel de grade pneumatique, tout en offrant à ces compositions une hystérèse plus faible, synonyme d'une plus basse résistance au roulement.

Toutefois, l'utilisation d'un taux élevé de charges renforçantes inorganiques dans les compositions de caoutchouc présente l'inconvénient de pénaliser les propriétés d'adhérence sur sol mouillé des compositions de caoutchouc dans lesquelles elles sont incorporées.

Satisfaire à la fois à l'exigence d'adhérence, notamment sur sol mouillé, et de résistance au roulement reste donc une préoccupation constante des manufacturiers de pneumatiques.

Dans l'optique de rechercher le meilleur compromis de performances, les manufacturiers de pneumatiques élaborent des compositions de caoutchouc de plus en plus complexes, intégrant souvent plusieurs élastomères de nature chimique différente formant ainsi un mélange de caoutchouc. Un exemple de compositions complexes est décrit dans le document EP3372638, en particulier dans l'exemple 4 où la composition complexe comprend deux élastomères différents dont la différence de température de transition vitreuse n'excède pas 20°C, cette composition présentant une amélioration du compromis résistance au roulement / usure. JPH0827313A divulgue une composition élastomérique pour pneumatique présentant une bonne balance des propriétés de résistance au roulement et d'adhésion sur sol mouillé.

Il subsiste donc toujours un besoin de disposer de mélanges de caoutchouc présentant une résistance au roulement améliorée, tout en conservant une bonne adhérence sur sol mouillé, voire en améliorant cette propriété.

Un but de la présente invention est donc de proposer de nouveaux mélanges de caoutchouc, en particulier pour des bandes de roulement, qui remédient notamment aux inconvénients précités ; présentant des propriétés d'hystérèse améliorées tout en conservant, voire améliorant, leur performance d'adhérence sur sol mouillé.

Ce but est atteint en ce que la Demanderesse a découvert d'une manière surprenante qu'un mélange de caoutchouc ayant un profil de facteur de perte particulier, le profil de facteur de perte étant mesuré sur un intervalle de température allant de -80°C à 60 °C à une fréquence de 10 Hz et à une contrainte constante de 0,7 MPa, et étant à base d'une combinaison spécifique d'au moins deux compositions de caoutchouc C1 et C2 ayant des températures de transition vitreuse différentes et dont la différence de ces températures de transition vitreuse est supérieure ou égale à 23°C et dans lequel l'élastomère de la composition C1 est majoritaire dans le mélange, présentait une meilleure résistance au roulement tout en conservant de bonne propriétés d'adhérence sur sol mouillé, voire même des propriétés améliorées.

Un premier objet de l'invention concerne un mélange de caoutchouc présentant au moins deux Tg, Tg1 et Tg2, et à base d'au moins deux compositions de caoutchouc C1 et C2, la composition de caoutchouc C1 comprenant au moins un élastomère E1, et présentant la température de transition vitreuse Tg1, la composition C2 comprenant au moins un élastomère E2 et une charge renforçante, l'élastomère E2 étant différent de l'élastomère E1, et présentant la température de transition vitreuse Tg2, caractérisé en ce que :
- la température de transition vitreuse Tg1 de la composition C1 est supérieure ou égale à -50°C,
- le mélange de caoutchouc satisfait la relation mathématique Tg1 -Tg2 ≥ 23°C,
- le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C ; et
- l'élastomère E1 est majoritaire dans le mélange de caoutchouc.

Préférentiellement, le mélange de caoutchouc satisfait la relation mathématique Tg1 -Tg2 ≥ 25°C, de préférence Tg1 -Tg2 ≥ 28°C, plus préférentiellement encore Tg1 -Tg2 ≥ 30°C.

Avantageusement, le mélange de caoutchouc peut satisfaire la relation mathématique 25°C ≤ Tg1 -Tg2 ≤ 40°C, de préférence 28°C ≤ Tg1 -Tg2 ≤ 35°C, plus préférentiellement 28°C ≤ Tg1 -Tg2 ≤ 34°C.

Avantageusement, la température de transition vitreuse Tg2 de la composition C2 peut être inférieure ou égale à -43°C, de préférence inférieure ou égale à -50°C, plus préférentiellement inférieure ou égale à -57°C.

Avantageusement, la température de transition vitreuse Tg2 de la composition C2 est comprise dans un domaine allant de -90°C à -43°C, de préférence allant de -85°C à -50°C.

Avantageusement, l'élastomère E2 de la composition de caoutchouc C2 est un élastomère diénique. Plus avantageusement encore, l'élastomère E2 de la composition C2 est un élastomère diénique fonctionnalisé.

Avantageusement, la température de transition vitreuse TgE2 de l'élastomère E2 peut être comprise dans un domaine allant de -110°C à -23°C, de préférence allant de -100°C à -28°C, plus préférentiellement allant de -95°C à -30°C.

Avantageusement, l'élastomère E2 de la composition de caoutchouc C2 est un élastomère diénique, de préférence fonctionnalisé, choisi dans le groupe constitué par le caoutchouc naturel, les polyisoprènes de synthèse, les polybutadiènes, les copolymères d'isobutène et d'isoprène, les copolymères de butadiène et de styrène, les copolymères de butadiène et d'isoprène, les copolymères d'isoprène et de styrène et les copolymères de butadiène-styrène-isoprène. Préférentiellement, l'élastomère E2, de préférence fonctionnalisé, est choisi parmi les polybutadiènes et les copolymères de styrène et butadiène. Plus préférentiellement encore, l'élastomère E2, de préférence fonctionnalisé, est un copolymère de styrène et de butadiène.

Préférentiellement, l'élastomère E2 diénique fonctionnalisé de la composition de caoutchouc C2 comprend au moins une fonction chimique apte à interagir avec la charge renforçante, la fonction chimique comprenant au moins un hétéroatome choisi dans le groupe constitué par l'azote, le soufre, l'oxygène, le phosphore, l'étain et le silicium.

Préférentiellement, la charge renforçante de la composition C2 comprend majoritairement au moins une charge renforçante inorganique, plus préférentiellement comprend majoritairement au moins une silice.

Avantageusement, la charge renforçante de la composition C2 peut comprendre majoritairement une charge inorganique renforçante, préférentiellement majoritairement une silice, et l'élastomère E2 peut être un élastomère diénique fonctionnalisé comprenant au moins une fonction chimique apte à interagir avec la charge inorganique renforçante, la fonction chimique comprenant au moins un hétéroatome choisi dans le groupe constitué par l'azote, le soufre, l'oxygène et le phosphore. Avantageusement, la fonction chimique apte à interagir avec la charge renforçante peut être une fonction polaire comprenant au moins un atome d'oxygène.

Avantageusement, la température de transition vitreuse Tg1 de la composition de caoutchouc C1 peut être comprise dans un domaine allant de -48°C à -15°C, plus préférentiellement peut être comprise dans un domaine allant de -48°C à -15°C.

Avantageusement, la température de transition vitreuse Tg1 de la composition de caoutchouc C1 peut être supérieure ou égale à -48°C, de préférence supérieure ou égale à -40°C.

Avantageusement, l'élastomère E1 de la composition de caoutchouc C1 peut être un élastomère diénique. De préférence, l'élastomère E1 de la composition de caoutchouc C1 est un élastomère diénique non-fonctionnalisé.

Avantageusement, l'élastomère E1 de la composition de caoutchouc C1 est un élastomère diénique choisi dans le groupe constitué par le caoutchouc naturel, les polyisoprènes de synthèse, les polybutadiènes, les copolymères de butadiène et de styrène, les copolymères de butadiène et d'isoprène, les copolymères d'isoprène et de styrène et les copolymères de butadiène-styrène-isoprène. Préférentiellement, l'élastomère E1 de la composition de caoutchouc C1 est un élastomère diénique choisi dans le groupe constitué par les polyisoprènes de synthèse, les polybutadiènes, les copolymères de butadiène et de styrène, les copolymères de butadiène et d'isoprène, les copolymères d'isoprène et de styrène et les copolymères de butadiène-styrène-isoprène. Plus préférentiellement encore, l'élastomère E1 de la composition de caoutchouc C1 est un élastomère diénique choisi dans le groupe constitué par les polybutadiènes et les copolymères de butadiène et de styrène. Plus préférentiellement encore, l'élastomère E1 de la composition C1 est un copolymère de styrène et de butadiène.

Avantageusement, la température de transition vitreuse TgE1 de l'élastomère E1 peut être comprise dans un domaine allant de -50°C à 0°C, plus préférentiellement de -40°C à 0°C, plus préférentiellement de -30°C à 0°C.

Avantageusement, le taux de l'élastomère E1 dans le mélange peut être compris dans un domaine allant 50 pce à 70 pce, de préférence de 55 pce à 70 pce, plus préférentiellement de 55 pce à 65 pce.

Avantageusement, la composition C1 peut comprendre en outre une charge renforçante.

Avantageusement, le mélange de caoutchouc peut comprendre au moins un plastifiant.

Avantageusement, le mélange tel que défini ci-dessus et ses modes de réalisation préférentiels peut être obtenu selon un procédé de fabrication qui comprend les étapes suivantes :
- préparer la composition de caoutchouc C1 dans un mélangeur interne en introduisant l'élastomère E1 de la composition de caoutchouc C1 et le cas échéant les autres ingrédients tels qu'un plastifiant et conduire un travail thermomécanique jusqu'à une température maximale de 200°C pour obtenir la composition de caoutchouc C1 ;
- préparer la composition de caoutchouc C2 dans un mélangeur interne en introduisant l'élastomère E2 de la composition de caoutchouc C2, la charge renforçante le cas échéant les autres ingrédients tels qu'un plastifiant ou un agent de couplage de la charge renforçante, et conduire un travail thermomécanique jusqu'à une température maximale de 200°C pour obtenir la composition de caoutchouc C2;
- introduire dans un mélangeur interne les compositions de caoutchouc C1 et C2 obtenues aux étapes précédentes et conduire un travail thermomécanique jusqu'à une température maximale de 180°C pour obtenir une combinaison de compositions ;
- récupérer la combinaison de compositions de l'étape précédente et la refroidir à une température inférieure ou égale à 110°C ;
- incorporer dans la combinaison de compositions refroidie le système de réticulation et malaxer le tout jusqu'à une température maximale inférieure à 110°C, préférentiellement inférieure à 80°C, et récupérer le mélange de caoutchouc.

Un autre objet de la présente invention concerne une bande de roulement comprenant au moins un mélange défini ci-dessus.

Un autre objet de la présente invention concerne un pneumatique comprenant au moins un mélange défini ci-dessus ou comprenant au moins une bande de roulement définie ci-dessus.

Un premier objet de la présente invention concerne un mélange de caoutchouc présentant au moins deux températures de transition vitreuse Tg, notées Tg1 et Tg2, et à base d'au moins deux compositions de caoutchouc notées C1 et C2, la composition de caoutchouc C1 comprenant au moins un élastomère E1, et présentant la température de transition vitreuse Tg1, la composition C2 comprenant au moins un élastomère E2 et une charge renforçante, l'élastomère E2 étant différent de l'élastomère E1, et présentant la température de transition vitreuse Tg2, caractérisé en ce que :
- la température de transition vitreuse Tg1 de la composition C1 est supérieure ou égale à -50°C,
- le mélange de caoutchouc satisfait la relation mathématique Tg1 -Tg2 ≥ 23°C,
- le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C ; et
- l'élastomère E1 est majoritaire dans le mélange de caoutchouc.

Par « mélange de caoutchouc à base d'au moins », il faut entendre une combinaison d'au moins deux compositions de caoutchouc. Le mélange de caoutchouc peut être ainsi être à l'état totalement ou partiellement réticulé ou à l'état non-réticulé.

Par « composition de caoutchouc à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomères dans le mélange de caoutchouc.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans le mélange de caoutchouc, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères du mélange. De la même manière, une charge dite majoritaire est celle représentant la plus grande masse parmi les charges du mélange. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé « minoritaire » est un composé qui ne représente pas la fraction massique la plus grande parmi les composés du même type. De préférence par majoritaire, on entend présent à plus de 50 %, de préférence plus de 60 %, 70 %, 80 %, 90 %, et plus préférentiellement le composé « majoritaire » représente 100 %.

Les composés mentionnés dans la description comprenant du carbone peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Les températures de transition vitreuse, notée Tg1 et Tg2, du mélange de l'invention sont mesurées selon la norme NF EN ISO 11357-2 :05-2014 sur le mélange de caoutchouc.

Les températures de transition vitreuse des élastomères, notée TgE1 et TgE2, sont mesurées selon la norme ASTM D3418:2008.

Le facteur de perte, aussi appelé tan δ est une grandeur physique bien connue des manufacturiers de bandages pneumatiques. Le facteur de perte représente la fraction d'énergie dissipée durant une sollicitation cyclique.

Le profil de facteur de perte représente l'évolution du facteur de perte, tan δ, en fonction de la température lorsqu'on exerce une contrainte constante à une fréquence donnée. Dans le cadre de la présente invention, le profil de facteur de perte est mesuré sur un intervalle de température allant de -80°C à 60 °C à une fréquence de 10 Hz et à une contrainte constante de 0,7 MPa selon la norme ASTM D 5992 - 96.

### Ingrédients des compositions de caoutchouc C1 et C2

Les compositions de caoutchouc C1 et C2 formant le mélange de caoutchouc selon l'invention comprennent chacune au moins un élastomère, respectivement élastomère E 1 et élastomère E2 ; l'élastomère E1 étant différent de l'élastomère E2.

Par « élastomère », on entend un polymère qui est souple, déformable, présentant une élasticité de type caoutchouc selon la définition IUPAC des élastomères.

Préférentiellement, l'élastomère E1 de la composition de caoutchouc C1 et/ou l'élastomère E2 de la composition de caoutchouc C2 est un élastomère diénique.

Par « élastomère diénique ou indistinctement caoutchouc », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Par « matrice élastomérique », on entend l'ensemble des élastomères formant le mélange de caoutchouc de l'invention.

Les élastomères diéniques peuvent être classés dans deux catégories : « essentiellement insaturés » ou « essentiellement saturés ». On entend en général par « essentiellement insaturés », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % en moles).

On entend, plus particulièrement, par élastomère diénique susceptible d'être utilisé dans les mélanges de caoutchouc conformes à l'invention :
- tout homopolymère d'un monomère diène, conjugué ou non, ayant de 4 à 18 atomes de carbone ;
- tout copolymère d'un diène, conjugué ou non, ayant de 4 à 18 atomes de carbone et d'au moins un autre monomère.

L'autre monomère peut être une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial « vinyle-toluène », le para-tertiobutylstyrène.

Plus particulièrement, l'élastomère diénique est :
- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- un copolymère d'isobutène et d'isoprène (caoutchouc butyle), ainsi que les versions halogénées, en particulier chlorées ou bromées, de ce type de copolymère.

### Charge renforçante

La composition de caoutchouc C2 comprend une ou plusieurs charges renforçantes.

Selon un mode de réalisation de l'invention, la composition de caoutchouc C1 peut optionnellement comprendre également une ou plusieurs charges renforçantes.

On peut utiliser tout type de charge dite renforçante, connue pour ses capacités à renforcer une composition de caoutchouc utilisable notamment pour la fabrication de bandages pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les bandages pneumatiques ou les bandages non-pneumatique ou leurs bandes de roulement. Parmi ces derniers, on citera plus particulièrement les noirs de carbone renforçants de la série 200 comme par exemple le N234. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de bandages pneumatiques ou non pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃).

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et la matrice élastomérique.

L'homme du métier saura adapter le taux de charge renforçante total selon l'utilisation concernée du mélange de l'invention, notamment selon le type de bandages pneumatiques concerné, par exemple bandage pneumatique pour moto, pour véhicule de tourisme ou encore pour véhicule utilitaire tel que camionnette ou poids lourd.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante. Pour les noirs de carbone, la surface spécifique STSA est déterminée selon la norme ASTM D6556-2016.

### Les agents de couplage de la charge renforçante :

De manière connue, pour coupler la charge renforçante, on peut utiliser un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère, de préférence diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge renforçante inorganique et un second groupe fonctionnel comprenant un atome de soufre, ledit second groupe fonctionnel étant apte à interagir avec l'élastomère, de préférence diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

### Les agents de recouvrement

Les compositions de caoutchouc formant le mélange de l'invention peuvent également contenir des agents de recouvrement de la charge inorganique renforçante lorsqu'une charge inorganique renforçante est utilisée dans une composition du mélange de l'invention, permettant d'améliorer leur faculté de mise en oeuvre à l'état cru. Ces agents de recouvrement sont bien connus (voir par exemple les demandes de brevet WO2006/125533-A1, WO2007/017060-A1 et WO2007/003408-A1), on citera par exemple des silanes hydrolysables tels que des hydroxysilanes (voir par exemple WO2009/062733-A2) des alkylalkoxysilanes, des polyols (par exemple diols ou triols), des polyéthers (par exemple des polyéthylène-glycols), des amines primaires, secondaires ou tertiaires, des polyorgano-siloxanes hydroxylés ou hydrolysables (par exemple des α,ω-dihydroxy-poly-organosilanes (voir par exemple EP0784072-A1).

### Plastifiants

Les compositions de caoutchouc formant le mélange de l'invention peuvent comprendre au moins un plastifiant.

De manière connue de l'homme de l'art des compositions de caoutchouc pour bandages pneumatiques ou non pneumatiques, ce plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

De manière connues, les plastifiants dans les compositions de caoutchouc permettent de modifier la viscosité d'une composition de caoutchouc, d'ajuster la température de transition vitreuse de la composition de caoutchouc par rapport à son optimum d'utilisation.

Une résine hydrocarbonée de haute Tg est par définition un solide à température et pression ambiante (20°C, 1 atm), tandis qu'une huile plastifiante est liquide à température ambiante et pression et qu'une résine hydrocarbonée de faible Tg est visqueuse à température ambiante et pression.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants. Elles sont par nature au moins partiellement miscibles (i.e., compatibles) aux taux utilisés avec les compositions de caoutchouc auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pour bandages pneumatiques (5.5. « Rubber Tires and Mechanical Goods »). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode « Ring and Ball »). La Tg est mesurée selon la norme ASTM D3418 (2008). La macrostructure (Mw, Mn et Ip) de la résine hydrocarbonée est déterminée par chromatographie d'exclusion stérique (SEC) : solvant tétrahydrofurane ; température 35°C; concentration 1 g/l ; débit 1 ml/min ; solution filtrée sur filtre de porosité 0,45 µm avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé (« WATERS EMPOWER »). Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De manière connue, les résines hydrocarbonées de haute Tg sont des résines hydrocarbonées, thermoplastiques, dont la Tg est supérieure à 20°C.

De préférence, le plastifiant peut optionnellement comprendre une résine hydrocarbonée, solide à température et pression ambiante, dite résine de haute Tg. De préférence, la résine plastifiante hydrocarbonée de haute Tg présente au moins l'une quelconque des caractéristiques suivantes :
- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de haute Tg présente l'ensemble des caractéristiques préférentielles ci-dessus.

Le plastifiant peut optionnellement comprendre une résine hydrocarbonée visqueuse à 20 °C, dite « de faible Tg », c'est-à-dire qui par définition présente une Tg comprise dans un domaine allant de -40 °C à 20°C.

De préférence, la résine plastifiante hydrocarbonée de faible Tg présente au moins l'une quelconque des caractéristiques suivantes :
- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine hydrocarbonée de faible Tg présente l'ensemble des caractéristiques préférentielles ci-dessus.

Le plastifiant peut contenir également une huile d'extension (ou huile plastifiante) liquide à 20 °C, dit à « basse Tg », c'est-à-dire qui par définition présente une Tg inférieure à -20 °C, de préférence inférieure à -40 °C. Toute huile d'extension, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante. Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

Les résines hydrocarbonées de haute Tg, les résines hydrocarbonées de basse Tg, et les huiles plastifiantes préférentielles ci-dessus sont bien connues de l'homme du métier et disponibles commercialement.

### Autres additifs

Les compositions de caoutchouc formant le mélange de caoutchouc conforme à l'invention peuvent comporter également tout ou partie des additifs et agents de mise en oeuvre usuels, connus de l'homme de l'art et habituellement utilisés dans les compositions de caoutchouc pour bandages pneumatiques ou non pneumatiques, en particulier pour bandes de roulement, comme par exemple, des charges (renforçantes ou non renforçantes / autres que celles précitées), des pigments, des agents de protection tels que cires anti-ozone, anti-ozonants chimiques, antioxydants, des agents anti-fatigue, des résines renforçantes (telles que décrites par exemple dans la demande WO 02/10269).

### Système de réticulation

Les compositions de caoutchouc formant le mélange de caoutchouc conforme à l'invention peuvent comprendre au moins un système de réticulation. Le système de réticulation peut être tout type de système connu de l'homme de l'art dans le domaine des compositions de caoutchouc pour bandages pneumatiques ou non pneumatiques. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels que l'oxyde de zinc, l'acide stéarique ou tout composé équivalent tels que les sels d'acide stéarique et sels de métaux de transition, les dérivés guanidiques (en particulier diphénylguanidine), ou encore des retardateurs de vulcanisation connus.

Le soufre est utilisé à un taux préférentiel compris dans un domaine allant de 0,5 à 12 pce, plus préférentiellement dans un domaine allant de 0,7 à 10 pce. L'accélérateur de vulcanisation est utilisé à un taux préférentiel compris dans un domaine allant de 0,5 à 10 pce, plus préférentiellement compris dans un domaine allant de 0,5 à 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates.

### Composition de caoutchouc C1

Le mélange de caoutchouc selon l'invention comprend au moins une composition de caoutchouc, notée C1, ayant une température de transition vitreuse définie noté Tg1.

Cette composition de caoutchouc C1 comprend au moins un élastomère E1 tel que défini ci-dessus. De préférence, l'élastomère E1 est un élastomère diénique, plus préférentiellement encore, est un élastomère diénique non-fonctionnalisé.

Plus préférentiellement encore, l'élastomère E1 de la composition de caoutchouc C1 est choisi dans le groupe constitué par le caoutchouc naturel, les polyisoprènes de synthèse, les polybutadiènes, les copolymères de butadiène et de styrène, les copolymères de butadiène et d'isoprène, les copolymères d'isoprène et de styrène et les copolymères de butadiène-styrène-isoprène. Préférentiellement, l'élastomère E1 de la composition de caoutchouc C1 est choisi dans le groupe constitué par les polyisoprènes de synthèse, les polybutadiènes, les copolymères de butadiène et de styrène, les copolymères de butadiène et d'isoprène, les copolymères d'isoprène et de styrène et les copolymères de butadiène-styrène-isoprène. Plus préférentiellement encore, l'élastomère E1 de la composition de caoutchouc C1 est choisi dans le groupe constitué par les polybutadiènes et les copolymères de butadiène et de styrène. Plus préférentiellement, l'élastomère E1 de la composition de caoutchouc C1 est un copolymère de styrène et de butadiène.

Préférentiellement, cet élastomère E1 est un élastomère diénique non-fonctionnalisé. Par « un élastomère diénique non-fonctionnalisé », on entend au sens de la présente invention un élastomère diénique, qu'il soit naturel ou synthétique, qui n'est pas porteur d'une fonction chimique apte à interagir avec une charge renforçante. Préférentiellement, l'élastomère diénique non fonctionnalisé peut consister essentiellement en des atomes de carbone et d'hydrogène. Il peut ne pas comprendre d'hétéroatomes ou alors dans des quantités qui sont des impuretés et qui résultent de son procédé de synthèse.

Préférentiellement, l'élastomère diénique E1, de préférence un copolymère de styrène-butadiène, est non-fonctionnalisé et présente une température de transition vitreuse TgE1 supérieure ou égale à -50°C. Plus préférentiellement, la température de transition vitreuse TgE1 est comprise dans un domaine allant de -50°C à 0°C, plus préférentiellement de -40°C à 0°C, plus préférentiellement de -30°C à 0°C.

Préférentiellement, la composition de caoutchouc C1 peut comprendre, en outre, au moins une charge renforçante. La charge renforçante peut être tout type de charge renforçante telle que décrite ci-dessus. Préférentiellement, la charge renforçante est choisie dans le groupe constitué par un noir de carbone, une charge renforçante inorganique et leurs mélanges. Plus préférentiellement encore, la charge renforçante est choisi dans le groupe constitué par un noir de carbone, une silice et leurs mélanges.

La composition de caoutchouc C1 peut également comprendre au moins un plastifiant tel que décrit ci-dessus ou tout autre additif décrit ci-dessus.

### Composition de caoutchouc C2

Le mélange de caoutchouc selon l'invention comprend au moins une composition de caoutchouc, notée C2, ayant une température de transition vitreuse définie noté Tg2.

Cette composition de caoutchouc C2 comprend au moins un élastomère E2 tel que défini ci-dessus. De préférence, l'élastomère E2 est un élastomère diénique, plus préférentiellement encore, est un élastomère diénique fonctionnalisé.

Par « un élastomère diénique fonctionnalisé », on entend au sens de la présente invention un élastomère diénique, qu'il soit naturel ou synthétique, porteur d'une fonction chimique apte à interagir avec une charge renforçante. La fonction chimique apte à interagir avec la charge renforçante peut être un hétéroatome ou un groupe d'atome comprenant au moins un hétéroatome choisi parmi l'azote, le soufre, l'oxygène, le phosphore, l'étain et le silicium.

Préférentiellement, l'élastomère E2 est un élastomère diénique, de préférence fonctionnalisé, choisi dans le groupe constitué le caoutchouc naturel les polyisoprènes de synthèse, les polybutadiènes les copolymères de butadiène et de styrène, les copolymères de butadiène et d'isoprène, les copolymères d'isobutène et d'isoprène, les copolymères d'isoprène et de styrène et les copolymères de butadiène-styrène-isoprène. Préférentiellement, l'élastomère E2 est un élastomère diénique, de préférence fonctionnalisé, choisi dans le groupe constitué par les polybutadiènes et les copolymères de styrène et de butadiène. Plus préférentiellement encore, l'élastomère E2 est un copolymère de styrène et de butadiène, de préférence fonctionnalisé.

Avantageusement, la température de transition vitreuse TgE2 de l'élastomère E2, de préférence diénique notamment fonctionnalisé, est comprise dans un domaine allant de -110°C à -23°C, de préférence allant de -100°C à -28°C, plus préférentiellement allant de -95°C à -30°C.

La fonctionnalisation de l'élastomère diénique E2 est connue. Elle peut se faire lors de la synthèse de l'élastomère diénique ou bien après sa synthèse par greffage de fonctions chimiques sur les monomères de l'élastomère diénique.

L'élastomère diénique E2 fonctionnalisé comprend au moins une fonction chimique apte à interagir avec la charge renforçante, la fonction chimique comprenant au moins un hétéroatome choisi dans le groupe constitué par l'azote, le soufre, l'oxygène, le phosphore, l'étain et le silicium. On peut, à titre d'exemple, citer parmi ces fonctions les amines primaires, secondaires ou tertiaires, cycliques ou non, les isocyanates, les imines, les cyano, les thiols, les carboxylates, les époxydes, les phosphines primaires, secondaires ou tertiaires. Cette interaction de l'élastomère diénique E2 fonctionnalisé avec la charge renforçante peut s'établir par exemple par le biais de liaisons covalentes, de liaisons hydrogène, de liaisons ioniques et/ou électrostatiques entre la ou les fonctions de l'élastomère diénique et les fonctions chimiques présentent à la surface de la charge renforçante.

Préférentiellement, la fonction chimique apte à interagir avec la charge renforçante de l'élastomère diénique E2 est une fonction polaire comprenant au moins un atome d'oxygène.

Préférentiellement, la fonction polaire peut être choisie dans le groupe constitué par le silanol, les alkoxysilanes, les alkoxysilanes porteurs d'un groupement amine, l'époxyde, les éthers, les esters, les acides carboxyliques et l'hydroxyle. De tels élastomères fonctionnalisés sont connus en soi et sont décrits notamment dans les documents suivants FR2740778, US6013718, WO2008/141702, FR2765882, WO01/92402, WO2004/09686, EP1127909, US6503973, WO2009/000750 et WO 2009/000752.

De préférence, l'élastomère diénique fonctionnalisé est un élastomère diénique comportant une fonction polaire qui est un silanol.

Préférentiellement, le silanol est situé en bout de chaîne ou en milieu de la chaîne principale de l'élastomère diénique fonctionnalisé.

Préférentiellement, l'élastomère diénique fonctionnalisé peut être un élastomère diénique (notamment un SBR) dans lequel la fonction silanol est située en bout de chaîne. Cet élastomère diénique fonctionnalisé comprend en une extrémité de sa chaîne principale une fonction silanol ou un groupement polysiloxane ayant une extrémité silanol de formule -(SiR₁R₂-O-)mH avec m représentant un nombre entier de valeur allant de 3 à 8, de préférence 3, R₁ et R₂, identiques ou différents, représentent un radical alkyle de 1 à 10 atomes de carbone, de préférence un radicale alkyle ayant 1 à 4 atomes de carbone.

Ce type d'élastomère peut être obtenu selon les procédés décrits dans le document EP0778311 et plus particulièrement selon le procédé consistant, après une étape de polymérisation anionique, de fonctionnaliser l'élastomère vivant avec un agent de fonctionnalisation de type polysiloxane cyclique. À titre de polysiloxanes cycliques, on peut citer ceux répondant à la formule (V) 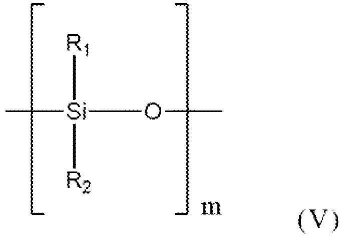 avec m représente un nombre entier de valeur allant de 3 à 8, de préférence 3, R₁ et R₂, identiques ou différents, représentent un radical alkyle de 1 à 10 atomes de carbone, de préférence un radicale alkyle ayant 1 à 4 atomes de carbone. Parmi ces composés on peut citer l'hexaméthylcyclotrisiloxane.

L'élastomère diénique E2 fonctionnalisé peut être un élastomère diénique (notamment un SBR) comportant une fonction polaire qui est un alcoxysilane porteur ou non d'une autre fonction, notamment d'une fonction amine. Préférentiellement l'alcoxysilane porteur ou non d'une autre fonction (de préférence porteur d'un groupement amine) est situé en bout de chaîne ou en milieu de chaîne de la chaîne principale de l'élastomère diénique fonctionnalisé, plus préférentiellement le groupement alcoxysilane porteur ou non du groupement amine est situé en milieu de chaîne de la chaîne principale de l'élastomère diénique fonctionnalisé.

Ainsi, l'élastomère diénique E2 fonctionnalisé peut comprendre au sein de sa structure au moins un groupe alcoxysilane et au moins une autre fonction, l'atome de silicium du groupe alcoxysilane étant lié à la ou aux chaînes élastomères, le groupe alcoxysilane étant éventuellement partiellement ou totalement hydrolysé en silanol.

Selon certaines variantes, le groupe alcoxysilane se situe majoritairement en une extrémité de la chaîne principale de l'élastomère.

Selon d'autres variantes, le groupe alcoxysilane se situe majoritairement dans la chaîne élastomère principale, on dira alors que l'élastomère diénique est couplé ou encore fonctionnalisé en milieu de chaîne, par opposition à la position en « extrémité de chaîne » et bien que le groupement ne se situe pas précisément au milieu de la chaîne élastomère. L'atome de silicium de cette fonction relie les deux branches de la chaîne principale de l'élastomère diénique.

Le groupe alcoxysilane comprend un radical alcoxyle en C1-C10, éventuellement partiellement ou totalement hydrolysé en hydroxyle, voire en C1-C8, de préférence en C1-C4, et est plus préférentiellement méthoxy et éthoxy.

L'autre fonction est de préférence portée par le silicium du groupe alcoxysilane, directement ou par l'intermédiaire d'un groupe espaceur défini comme étant un atome ou un groupe d'atomes. Préférentiellement le groupe espaceur est un radical hydrocarboné divalent, linéaire ou ramifié, aliphatique en C1-C18, saturé ou non, cyclique ou non, ou un radical hydrocarboné divalent aromatique en C6-C18.

L'autre fonction est de préférence une fonction comprenant au moins un hétéroatome choisi parmi N, S, O, P. On peut, à titre d'exemple, citer parmi ces fonctions, les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en C1-C10, de préférence alkyle en C1-C4, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-. A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole. Ainsi, à titre de fonction carboxylate, on peut citer les acrylates ou les méthacrylates. Une telle fonction est de préférence un méthacrylate. A titre de fonction époxyde, on peut citer les groupements époxy ou glycidyloxy. A titre de fonction phosphine secondaire ou tertiaire, on peut citer les phosphines substituées par des radicaux alkyle en C1-C10, de préférence alkyle en C1-C4, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

L'autre fonction est de préférence une amine tertiaire, plus préférentiellement un groupement diéthylamino- ou diméthylamino-.

Le groupe alcoxysilane peut être représenté par la formule

(*-)ₐSi (OR')_{b}R_{c}X

dans laquelle,
- *- représente la liaison à une chaîne élastomère ;
- le radical R représente un radical alkyle, substitué ou non substitué, en C1-C10, voire en C1-C8, de préférence un radical alkyle en C1-C4, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, étant en C1-C10, voire en C1-C8, de préférence un radical alkyle en C1-C4, plus préférentiellement méthyle et éthyle ;
- X représente un groupement incluant l'autre fonction ;
- a vaut 1 ou 2, b vaut 1 ou 2, et c vaut 0 ou 1, sous réserve que a+b+c =3.

Ce type d'élastomère est principalement obtenu par fonctionnalisation d'un élastomère vivant issu d'une polymérisation anionique par un composé comprenant un groupement alcoxysilane, notamment choisi parmi les composés trialcoxysilanes et dialcoxyalkylsilanes substitués par un groupement comprenant une autre fonction liée directement ou par l'intermédiaire d'un groupe espaceur à l'atome de silicium, la fonction et le groupe espaceur étant tels que définis plus haut. Il convient de préciser qu'il est connu de l'homme du métier que lorsqu'un élastomère est modifié par réaction d'un agent de fonctionnalisation sur l'élastomère vivant issu d'une étape de polymérisation anionique, on obtient un mélange d'espèces modifiées de cet élastomère dont la composition dépend des conditions de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Ces élastomères diéniques non fonctionnels sont disponibles commercialement auprès de fournisseurs tels que Nippon Zéon, JSR, Bayer, etc ou peuvent être synthétisés selon des procédés connus.

La composition de caoutchouc C2 comprend, en outre, au moins une charge renforçante. La charge renforçante peut être tout type de charge renforçante telle que décrite ci-dessus. Préférentiellement, la charge renforçante de la composition C2 comprend majoritairement au moins une charge renforçante inorganique, plus préférentiellement comprend majoritairement au moins une silice.

Préférentiellement, lorsque la charge renforçante comprend majoritairement une charge inorganique renforçante, préférentiellement une silice, l'élastomère diénique E2 fonctionnalisé peut comprendre au moins une fonction chimique apte à interagir avec la charge renforçante, la fonction chimique comprenant au moins un hétéroatome choisi dans le groupe constitué par l'azote, le soufre, l'oxygène et le phosphore.

La composition de caoutchouc C2 peut également comprendre au moins un plastifiant tel que décrit ci-dessus ou tout autre additif décrit ci-dessus.

### Mélange de de caoutchouc selon l'invention et son procédé de fabrication

Comme vu précédemment, le mélange de caoutchouc conforme à l'invention présente au moins deux températures de transition vitreuse Tg1 et Tg2 et résulte de la combinaison spécifique d'au moins deux compositions de caoutchouc C1 et C2 sélectionnées de telle manière que :
- la température de transition vitreuse Tg1 de la composition C1 est supérieure ou égale à -50°C,
- le mélange de caoutchouc satisfait la relation mathématique Tg1 -Tg2 ≥ 23°C,
- le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C ; et
- l'élastomère E1 est majoritaire dans le mélange de caoutchouc.

De manière surprenante, cette combinaison spécifique de compositions de caoutchouc permet d'obtenir un mélange de caoutchouc présentant simultanément de bonnes propriétés d'hystérèse et une bonne adhérence sur sol mouillé. Sans être lié par une théorie, si le mélange de caoutchouc présente une différence de températures de transition vitreuse inférieure à 23°C, alors les propriétés d'hystérèse sont détériorées et le mélange de caoutchouc ne présente pas une bonne résistance au roulement. Si le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur supérieur à 23°C, alors le mélange de caoutchouc présente un mauvais coefficient de frottement dynamique, donc des propriétés d'adhérence sur sol mouillé détériorées.

Préférentiellement, le mélange de caoutchouc satisfait la relation mathématique Tg1 -Tg2 ≥ 25°C, de préférence Tg1 -Tg2 ≥ 28°C, plus préférentiellement encore Tg1 -Tg2 ≥ 30°C.

Avantageusement, le mélange de caoutchouc satisfait la relation mathématique 25°C ≤Tg1 -Tg2 ≤ 40°C, de préférence 28°C ≤Tg1 -Tg2 ≤ 35°C, plus préférentiellement 28°C ≤Tg1 -Tg2 ≤ 34°C.

Préférentiellement, la température de transition vitreuse Tg1 de la composition de caoutchouc C1 est supérieure ou égale à -48°C, de préférence supérieure ou égale à -40°C.

Préférentiellement, la température de transition vitreuse Tg1 de la composition de caoutchouc C1 est comprise dans un domaine allant de -48°C à -15°C, de préférence comprise dans un domaine allant de -40°C à -15°C.

Préférentiellement, la température de transition vitreuse Tg2 de la composition C2 est inférieure ou égale à -43°C, de préférence inférieure ou égale à -50°C, plus préférentiellement encore inférieure ou égale à -57°C.

Préférentiellement, la température de transition vitreuse Tg2 de la composition C2 est comprise dans un domaine allant de -90°C à -43°C, de préférence allant de -85°C à -50°C.

Préférentiellement, le mélange de caoutchouc selon l'invention est à base d'au moins une composition de caoutchouc C1 de température transition vitreuse Tg1 et comprenant un élastomère E1 diénique non-fonctionnalisé, et la température de transition vitreuse Tg1 étant comprise dans un domaine allant de -48°C à -15°C et une composition de caoutchouc C2 de température de transition vitreuse Tg2 et comprenant un élastomère E2 diénique fonctionnalisé, et la température de transition vitreuse Tg2 étant comprise dans un domaine allant de -85°C à -50°C ; le mélange de caoutchouc satisfait la relation mathématique Tg1 -Tg2 ≥ 28°C, de préférence Tg1 -Tg2 ≥ 30°C, le mélange de caoutchouc ayant un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C et l'élastomère E1 étant majoritaire dans le mélange de caoutchouc.

Préférentiellement, le mélange de caoutchouc selon l'invention est à base d'au moins une composition de caoutchouc C1 de température transition vitreuse Tg1 et comprenant un élastomère E1 diénique non-fonctionnalisé, et la température de transition vitreuse Tg1 étant comprise dans un domaine allant de -40°C à -15°C et une composition de caoutchouc C2 de température de transition vitreuse Tg2 et comprenant un élastomère E2 diénique fonctionnalisé, et la température de transition vitreuse Tg2 étant comprise dans un domaine allant de -90°C à -43°C, le mélange de caoutchouc satisfait la relation mathématique Tg1 -Tg2 ≥ 28°C, de préférence Tg1 -Tg2 ≥ 30°C, le mélange de caoutchouc ayant un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C et l'élastomère E1 étant majoritaire dans le mélange de caoutchouc.

Préférentiellement, le taux de l'élastomère E1, de préférence diénique, notamment non-fonctionnalisé dans le mélange de caoutchouc de l'invention est compris dans un domaine allant de 50 pce à 70 pce, de préférence de 55 pce à 70 pce, plus préférentiellement de 55 pce à 65 pce.

Préférentiellement, le taux de l'élastomère E2, de préférence diénique, notamment fonctionnalisé dans le mélange de caoutchouc de l'invention est inférieur ou égal à 40 pce, plus préférentiellement est compris dans un domaine allant 30 pce à 50 pce, de préférence de 30 pce à 45 pce, plus préférentiellement de 35 pce à 45 pce.

Avantageusement, le taux de l'élastomère E1, de préférence diénique, notamment non-fonctionnalisé, dans le mélange de caoutchouc de l'invention est compris dans un domaine allant 50 pce à 70 pce et le taux de l'élastomère E2, de préférence diénique, notamment fonctionnalisé, dans le mélange de caoutchouc de l'invention est compris dans un domaine allant 30 pce à 50 pce. Avantageusement, le taux de l'élastomère E1, de préférence diénique, notamment non-fonctionnalisé, dans le mélange de caoutchouc de l'invention est compris dans un domaine allant 55 pce à 70 pce et le taux de l'élastomère E2, de préférence diénique, notamment fonctionnalisé, dans le mélange de caoutchouc de l'invention est compris dans un domaine allant 30 pce à 45 pce.

De préférence, le taux de charge renforçante dans le mélange de caoutchouc de l'invention est compris dans un domaine allant de 20 à 100 pce, plus préférentiellement de 30 à 90 pce, et encore plus préférentiellement de 40 à 90 pce ; l'optimum étant de manière connue différent selon les applications particulières visées.

Lorsque la charge renforçante est une charge inorganique renforçante comme une silice par exemple, il peut être avantageux d'utiliser un agent de couplage. Préférentiellement, la teneur en agent de couplage dans le mélange de caoutchouc de l'invention est avantageusement inférieure ou égale à 20 pce, étant entendu qu'il est en général souhaitable d'en utiliser le moins possible. Typiquement le taux d'agent de couplage représente de 0,5 % à 15 % en poids par rapport à la quantité de charge inorganique renforçante. Son taux est préférentiellement compris dans un domaine allant de 0,5 à 20 pce. Ce taux est aisément ajusté par l'homme du métier selon le taux de charge inorganique renforçante utilisé dans la composition de l'invention.

Selon une mode de réalisation préférée, la charge renforçante est majoritairement une charge renforçante inorganique (de préférence de la silice) dans le mélange de caoutchouc selon l'invention, c'est-à-dire que la charge renforçante comprend plus de 50 % (>50%) en poids d'une charge renforçante inorganique telle que de la silice par rapport au poids total de la charge renforçante dans le mélange de caoutchouc. Optionnellement selon ce mode de réalisation, la charge renforçante peut comprendre également du noir de carbone. Selon cette option, le noir de carbone est utilisé à un taux inférieur ou égal à 20 pce dans le mélange de caoutchouc, plus préférentiellement inférieur ou égal à 10 pce (par exemple le taux de noir de carbone peut être compris dans un domaine allant de 0,5 à 20 pce, notamment allant de 1 à 10 pce dans le mélange de caoutchouc). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

### Procédé de fabrication du mélange de caoutchouc

Le mélange de caoutchouc de l'invention peut être obtenu par les procédés habituels de fabrications de mélanges de caoutchouc tel que le mélangeage à sec des différents ingrédients.

Selon un mode de réalisation, le mélange de caoutchouc conforme à l'invention est fabriqué dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), dans l'ordre séquentiel suivant, l'élastomère E2 de la composition de caoutchouc de température de transition vitreuse Tg2, la charge renforçante et éventuellement l'agent de couplage de la charge renforçante. Après un malaxage thermomécanique au cours duquel ces ingrédients sont maintenus à une température comprise dans un domaine allant de 140°C à 200°C pendant une à deux minutes, on introduit dans le mélangeur interne l'élastomère E1 de la composition de caoutchouc de température de transition vitreuse Tg1, ainsi que tous les constituants nécessaires, à l'exception du système de réticulation. Ces ingrédients subissent un malaxage thermomécanique pendant 2 à 10 minutes jusqu'à une température maximale comprise dans un domaine allant de 110°C à 200°C, de préférence allant de 130°C à 185°C (et dite « température de tombée ») ;
- une seconde phase de travail mécanique (phase dite « productive »), est réalisée dans un mélangeur externe tel qu'un mélangeur à cylindres, après refroidissement du mélange obtenu au cours de la première phase non-productive jusqu'à une plus basse température, typiquement inférieure à 120°C, par exemple dans un domaine allant de 40°C à 100°C. On incorpore alors le système de réticulation en mélangeant pendant 5 à 15 min, pour obtenir le mélange de caoutchouc de l'invention.

Selon un autre mode préféré de réalisation de l'invention, le mélange de caoutchouc de l'invention est préparé sous forme de deux compositions de caoutchouc, puis les compositions de caoutchouc sont combinées de manière à obtenir le mélange de caoutchouc selon l'invention.

Plus précisément, selon ce mode de réalisation, le mélange tel que défini ci-dessus et ses modes de réalisation préférentiels peut être obtenu selon le procédé de fabrication comprenant les étapes suivantes :
- préparer la composition de caoutchouc C1 dans un mélangeur interne en introduisant l'élastomère E1 de la composition de caoutchouc C1 et le cas échéant les autres ingrédients tels qu'un plastifiant et conduire un travail thermomécanique jusqu'à une température maximale de 200°C pour obtenir la composition de caoutchouc C1 ;
- préparer la composition de caoutchouc C2 dans un mélangeur interne en introduisant l'élastomère E2 de la composition de caoutchouc C2, la charge renforçante le cas échéant les autres ingrédients tels qu'un plastifiant ou un agent de couplage de la charge renforçante, et conduire un travail thermomécanique jusqu'à une température maximale de 200°C pour obtenir la composition de caoutchouc C2;
- introduire dans un mélangeur interne les compositions de caoutchouc C1 et C2 obtenues aux étapes précédentes et conduire un travail thermomécanique jusqu'à une température maximale de 180°C pour obtenir une combinaison de compositions ;
- récupérer la combinaison de compositions de l'étape précédente et la refroidir à une température inférieure ou égale à 110°C ;
- incorporer dans la combinaison de compositions refroidie le système de réticulation et malaxer le tout jusqu'à une température maximale inférieure à 110°C, préférentiellement inférieure à 80°C, et récupérer le mélange de caoutchouc.

Plus précisément, on prépare la première composition de caoutchouc, dite composition C1, en mélangeant dans un mélangeur approprié tel qu'un mélangeur interne usuel (par exemple de type « Banbury ») l'élastomère E1 et les autres constituants éventuels de la composition C1 tels que le ou les plastifiants, les anti-ozonant, etc à l'exception du système de vulcanisation. Un travail thermomécanique est conduit pendant 2 à 10 minutes jusqu'à une température maximale comprise dans un domaine allant de 110°C à 200°C, de préférence allant de 130°C à 185°C (dite « température de tombée »). On récupère ainsi la composition de caoutchouc C1.

On prépare ensuite la deuxième composition de caoutchouc, dite composition C2, en mélangeant dans un mélangeur approprié tel qu'un mélangeur interne usuel (par exemple de type « Banbury ») l'élastomère E2, la charge renforçante et les autres constituants éventuels tels que le ou les plastifiants et l'agent de couplage de la charge renforçante, les anti-ozonant, etc à l'exception du système de vulcanisation. Un travail thermomécanique est conduit pendant une durée 2 à 10 minutes jusqu'à une température maximale comprise dans un domaine allant de 140°C à 200°C, de préférence allant de 140°C à 185°C (et dite « température de tombée »). On récupère ainsi la composition de caoutchouc C2.

On introduit dans un mélangeur interne usuel (par exemple de type « Banbury »), les deux compositions de caoutchouc C1 et C2 des étapes précédentes et on conduit un travail thermomécanique pendant 2 à 10 minutes jusqu'à une température maximale comprise dans un domaine allant de 110°C à 180°C, de préférence allant de 130°C à 180°C (et dite « température de tombée »).

Le mélange de l'étape précédente est ensuite refroidi sur un mélangeur externe tel qu'un mélangeur à cylindres jusqu'à une température inférieure ou égale à 110°C.On incorpore alors le système de réticulation par mélangeage pendant 5 à 15 min, et, et on récupère le mélange de caoutchouc selon l'invention.

Quel que soit le mode de préparation du mélange de caoutchouc, le mélange de caoutchouc final ainsi obtenu est ensuite calandré par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement d'un bandage pneumatique ou non pneumatique notamment pour véhicule tourisme.

Le mélange de caoutchouc peut être soit à l'état cru (avant réticulation ou vulcanisation), soit à l'état cuit (après réticulation ou vulcanisation), peut être un produit semi-fini qui peut être utilisé dans un bandage pneumatique ou non pneumatique.

La réticulation du mélange de caoutchouc peut être conduite de manière connue de l'homme du métier, par exemple à une température comprise dans un domaine allant de 130°C à 200°C, sous pression.

### Autres objets de l'invention

Un autre objet de la présente invention est une bande de roulement comprenant au moins un mélange de caoutchouc défini ci-dessus. Le mélange de caoutchouc selon l'invention peut constituer toute la bande de roulement ou bien une partie de la bande de roulement.

Un autre objet de la présente invention concerne un bandage pneumatique ou non pneumatique comprenant au moins un mélange de caoutchouc défini ci-dessus ou au moins une bande de roulement définie ci-dessus.

Par « bandage pneumatique », on entend un bandage destiné à former une cavité en coopérant avec un élément support, par exemple une jante, cette cavité étant apte à être pressurisée à une pression supérieure à la pression atmosphérique. Par opposition, un « bandage non pneumatique » n'est pas apte à être pressurisé. Ainsi un bandage non pneumatique est un corps torique constitué par au moins un matériau polymérique, destiné à assurer la fonction d'un pneumatique mais sans être soumis à une pression de gonflage. Un bandage non pneumatique peut être plein ou creux. Un bandage non pneumatique creux peut contenir de l'air, mais à la pression atmosphérique, c'est-à-dire qu'il n'a pas de rigidité pneumatique apportée par un gaz de gonflage à une pression supérieure à la pression atmosphérique.

Les bandages pneumatiques selon l'invention sont destinés à équiper notamment des véhicules de tout type tels que les véhicules de tourisme, les véhicules à deux roues, les véhicules poids lourds, les véhicules agricoles, les véhicules de génie civil ou des avions ou, plus généralement, sur tout dispositif roulant. Les bandages non pneumatiques sont destinés à équiper notamment des véhicules de tourisme ou des deux roues. De manière préférée, les bandages pneumatiques selon l'invention sont destinés à équiper les véhicules tourisme.

Préférentiellement, le bandage pneumatique ou non pneumatique comprend au moins une bande de roulement comprenant au moins un mélange de caoutchouc défini ci-dessus.

### METHODES DE MESURES

Détermination de la température de transition vitreuse des élastomères

Les températures de transitions vitreuses (Tg) des élastomères, avant leur utilisation, sont déterminées à l'aide d'un calorimètre différentiel (« différential scanning calorimeter ») selon la norme ASTM D3418:2008.

### Détermination de la température de transition vitreuse du mélange

La température de transition vitreuse mélange est mesurée selon la norme NF EN ISO 11357-2 :05-2014 à l'aide d'un appareil DSC3+ Mettler Toledo et de creusets en aluminium de 40 µl. Les mesures de balayage s'effectuent de la manière suivante sous hélium à un débit de 40 ml/min :
- Echantillon porté de +25°C à -150°C avec une rampe de 50°C/min ;
- Isotherme à -150°C pendant 5 min ;
- Chauffage de -150°C à +200°C avec une rampe de 20°C/min ;
- Isotherme à +200°C pendant 5 min ;
- Refroidissement de +200°C à -150°C avec une rampe de 20°C/min ;
- Isotherme à -150°C pendant 5 min ;
- Chauffage de -150°C à +200°C avec une rampe de 20°C/min .

### Détermination du coefficient µₘₐₓ

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self Affine Road Surfaces, Elastomere Friction, 2010, 51, p. 8). Les éprouvettes sont réalisées par moulage, puis réticulation d'un support caoutchouteux carré (50 mm × 50 mm) de 6 mm d'épaisseur. Après fermeture du moule, celui-ci est placé dans une presse à plateaux chauffants à la température de 150°C, et pendant le temps nécessaire à la réticulation du matériau (typiquement plusieurs dizaines de minutes), à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol+éprouvette est immergé dans une solution aqueuse à 5 % d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 1,2 m/s. La contrainte normale appliquée σₙ est de 400 kPa (soit 4 bars). Ces conditions sont décrites ci-après par « conditions de sol mouillé ». On mesure en continu la contrainte tangentielle σₜ opposée au mouvement de l'éprouvette sur le sol. Le rapport entre la contrainte tangentielle σₜ et la contrainte normale σₙ donne le coefficient de frottement dynamique µ. Les valeurs de coefficient de frottement dynamique sont mesurées lors d'un balayage en température de la solution aqueuse, allant de 3°C à 44°C, sont obtenues en régime permanent après stabilisation de la valeur de la contrainte tangentielle σₜ.

Dans les exemples, on indique la valeur maximale du coefficient de frottement dynamique (noté µₘₐₓ) mesurée lors de ce balayage.

Sauf indication contraire, les résultats sont indiqués en base 100. La valeur arbitraire 100 étant attribuée au mélange comparatif pour calculer et comparer ensuite le coefficient de frottement dynamique maximal des différents échantillons testés. La valeur en base 100 pour l'échantillon à tester est calculée selon l'opération : (valeur de µₘₐₓ de l'échantillon à tester / valeur du µₘₐₓ mélange comparatif) × 100. De cette façon, un résultat inférieur à 100 indiquera une diminution du coefficient µₘₐₓ et donc une baisse de la performance d'adhérence sur sol mouillé. Inversement, un résultat supérieur à 100 indiquera une augmentation du coefficient µₘₐₓ et donc une augmentation de la performance d'adhérence sur sol mouillé.

Mesure des propriétés dynamiques après cuisson.

Les propriétés dynamiques tan (δ)max sont mesurées sur un viscoanalyseur (Metravib V A4000), selon la norme ASTM D 5992 - 96. On enregistre la réponse d'un échantillon du mélange vulcanisé (2 éprouvettes cylindriques de 2 mm d'épaisseur et de 78,5 mm² de section), soumis à une sollicitation sinusoïdale en cisaillement simple alterné, à la fréquence de 10 Hz et à une température de 40°C. On effectue un balayage en amplitude de déformation crête à crête de 1 à 100% (cycle aller), puis de 100% à 1 % (cycle retour). Les résultats exploités sont le facteur de perte (tan δ). Pour le cycle retour, on indique la valeur maximale de tan δ observée (tan (δ)max) noté tan δ_{max à 40°C}.

Les résultats sont exprimés en performance base 100, c'est-à-dire qu'on affecte arbitrairement la valeur 100 au mélange comparatif, pour calculer et comparer ensuite le tan δ_{max à 40°C} des différentes mélange testés. La valeur en base 100 est calculée selon l'opération : (valeur de tan δ_{max à 40°C} du mélange comparatif / valeur de tan δ_{max à 40°C} de l'échantillon) * 100. De cette façon, une valeur plus basse représente une diminution des propriétés d'hystérèse tandis qu'une valeur plus élevée représente une amélioration des propriétés d'hystérèse.

### Mesure du profil du facteur de perte mesuré selon ASTM D 5992 - 96

On enregistre la réponse d'une éprouvette constituée de deux pastilles cylindriques de 2 mm d'épaisseur chacune 78,5 mm² de section et d'un centimètre de diamètre. L'éprouvette est soumise à une sollicitation sinusoïdale en cisaillement simple alterné, à la fréquence de 10 Hz, pendant un balayage de température de -80°C à + 100°C avec une rampe de +1,5°C/min sous une contrainte constante de 0,7 MPa. L'acquisition des données est faite à une fréquence 0,12 Hz qui pourra être adaptée pour obtenir la précision souhaitée.

On détermine ensuite, pour les pics de tan δ présents à une température supérieure à la température de transition vitreuse Tg1, la largeur du pic à mi-hauteur de chacun de ces pics.

Cette largeur à mi-hauteur est définie comme suit : soit un maximum donné se trouvant à une température T0 et ayant une valeur associée de tan δ Y. On relève alors l'ensemble des températures associées à des valeurs de tan δ égale à Y/2. Parmi ces valeurs, la largeur du pic à mi-hauteur correspond alors à l'écart en °C entre les deux plus proches températures encadrant T0 la température du maximum.

### EXEMPLES

### 1- Ingrédients :

Les ingrédients utilisés dans les exemples sont les suivants :
Elastomère (1A) : Copolymère styrène-butadiène, non fonctionnalisé, ayant une Tg de -28°C mesurée selon la norme ASTM D3418 :2008, un taux de styrène de 41 % en poids par rapport au poids total du copolymère, un taux de butadiène 1,2 vinyl de 14 % en poids par rapport au poids total du copolymère, un taux de butadiène 1,4-trans de 27 % en poids par rapport au poids total du copolymère.
Elastomère (1B) : Copolymère styrène-butadiène porteur d'une fonction silanol en extrémité de la chaîne élastomère, et ayant une Tg de -24°C mesurée selon la norme ASTM D3418 :2008, un taux de styrène de 25 % en poids par rapport au poids total du copolymère, un taux de butadiène 1,2 vinyl de 43% en poids par rapport au poids total du copolymère, un taux de butadiène 1,4-trans de 16 % en poids par rapport au poids total du copolymère.
Elastomère (1C) : Copolymère styrène-butadiène ayant une Tg de -65°C mesurée selon la norme ASTM D3418 :2008, un taux de styrène de 16 % en poids par rapport au poids total du copolymère, un taux de butadiène 1,2 vinyl de 20% en poids par rapport au poids total du copolymère, un taux de butadiène 1,4-trans de 39 % en poids par rapport au poids total du copolymère.
Elastomère (1D) : Copolymère styrène-butadiène porteur d'une fonction amino-alcoxysilane en milieu de chaîne et ayant une Tg de -65°C mesurée selon la norme ASTM D3418 :2008, un taux de styrène de 16 % en poids par rapport au poids total du copolymère, un taux de butadiène 1,2 vinyl de 20 % en poids par rapport au poids total du copolymère, un taux de butadiène 1,4-trans de 39 % en poids par rapport au poids total du copolymère.
Elastomère (1F) : Copolymère styrène-butadiène porteur d'une fonction amino-alcoxysilane en milieu de chaîne et ayant une Tg de -48°C mesurée selon la norme ASTM D3418 :2008, un taux de styrène de 27 % en poids par rapport au poids total du copolymère, un taux de butadiène 1,2 vinyl de 17,5 % en poids par rapport au poids du copolymère, un taux de butadiène 1,4-trans de 33,5 % en poids par rapport aux poids total du copolymère.
Elastomère (1G) : Copolymère styrène-butadiène non-fonctionnalisé et ayant une Tg de -48°C mesurée selon la norme ASTM D3418 :2008, un taux de styrène de 27 % en poids par rapport au poids total du copolymère, un taux de butadiène 1,2 vinyl de 17,5 % en poids par rapport au poids total du copolymère, un taux de butadiène 1,4 de 33,5 % en poids par rapport au poids total du copolymère.
Noir de carbone (2) : noir de carbone de grade ASTM N234 commercialisé par Cabot Corporation.
Silice (3) : Silice « Zeosil 1165MP » commercialisée par Solvay .
Silane (4) : Bis[3-(triéthoxysilyl)propyl] tétrasulfure silane (TESPT) commercialisé par Evonik sous la référence « Si69 ».
DPG (5) : Diphénylguanidine « Perkacit DPG » de la société Flexsys.
Plastifiant (6) : résine DCPD ayant un point de ramollissement de 100 °C, une température de transition vitreuse de 51°C commercialisée sous la référence « PR-383 » par Exxon Mobil.
Cire anti-ozone (7) : Cire anti-ozone « VARAZON 4959 » de la société Sasol Wax
Anti-oxydant (8) : N-1,3-diméthylbutyl-N-phenyl-para-phénylènediamine commercialisé par Flexys sous la référence « Santoflex 6-PPD.
ZnO (9) : Oxyde de Zinc (grade industriel) commercialisé par la société Umicore.
Acide stéarique (10) : Stéarine « Pristerene 4031 » commercialisée par la société Uniquema.

### 2. Essai 1 : Impact de la localisation des charges renforçantes dans le mélange de caoutchouc

Les exemples présentés dans le tableau 1 ont pour but de comparer les différentes propriétés de caoutchouterie du mélange de caoutchouc MI1 conforme à l'invention à une série de mélanges de caoutchouc comparatifs MT1 et MT2 ; le mélange de caoutchouc MI1 se différenciant des autres mélanges par la répartition de la charge renforçante au sein de la matrice élastomère.

Le tableau 1 présente la formulation de ces mélanges ; les proportions sont exprimées en pce c'est-à-dire en partie en poids pour 100 parties en poids des élastomères du mélange.

**Tableau 1**

| | MT1 | MT2 | MI1 |
|---|---|---|---|
| Elastomère (1A) | 50,0 | 0,0 | 60,0 |
| Elastomère (1B) | 0,0 | 40,0 | 0,0 |
| Elastomère (1C) | 50,0 | 60,0 | 0,0 |
| Elastomère (1D) | 0,0 | 0,0 | 40,0 |
| Noir (2) | 3,8 | 3,8 | 3,8 |
| Silice (3) | 55,0 | 55,0 | 55,0 |
| Silane (4) | 4,4 | 4,4 | 4,4 |
| DPG (5) | 1,2 | 1,2 | 1,2 |
| Plastifiant (6) | 16,0 | 16,0 | 16,0 |
| Cire anti-ozone (7) | 2,0 | 2,0 | 2,0 |
| Anti-Oxydant (8) | 1,0 | 1,0 | 1,0 |
| ZnO (9) | 2,5 | 2,5 | 2,5 |
| Acide stéarique (10) | 2,0 | 2,0 | 2,0 |
| Soufre | 1,8 | 1,8 | 1,8 |
| CBS | 2,2 | 2,2 | 2,2 |

Le mélange comparatif MT1 est obtenu de la manière suivante :
On introduit, dans un mélangeur interne « Polylab » de 414 cm³, rempli à 70 % en volume et dont la température initiale de cuve est de 90°C, en une ou plusieurs fois tous les ingrédients du tableau 2. On conduit, pendant 6 min, un travail thermomécanique jusqu'à atteindre une température maximale de tombée de 165°C. On récupère la composition ainsi obtenue, appelée composition C1.

Dans un autre mélangeur interne « Polylab » de 414 cm³, rempli à 70 % en volume et dont la température initiale de cuve est de 90°C, on introduit en une ou plusieurs fois tous les ingrédients du tableau 3. On conduit, pendant 6 min, un travail thermomécanique jusqu'à atteindre une température maximale de tombée de 165°C. On récupère la composition ainsi obtenue, appelée composition C2.

On introduit ensuite dans un mélangeur interne « Polylab » de 414 cm³, rempli à 70 % en volume la composition C1 obtenue précédemment et la composition C2 précédente et on fournit un travail thermomécanique pendant une durée de 5 min jusqu'à atteindre une température maximale de tombée de 150°C.

On introduit ensuite le mélange de l'étape précédente dans un mélangeur externe, tel qu'un mélangeur à cylindre, de manière à refroidir ce mélange jusqu'à une température de 40°C. On incorpore alors le système de réticulation (1,8 pce de soufre et 2,2 pce de CBS (N-cyclohexyl-2-benzothiazyl-sulfénamide commercialisée par Flexys sous la référence « Santocure CBS ») et on mélange pendant 20 min. Le mélange ainsi obtenu est ensuite calandré sous la forme de plaques pour effectuer les mesures de ses propriétés physiques ou mécaniques. Sauf indications contraires, les propriétés de caoutchouterie du mélange de caoutchouc sont mesurées après cuisson à 170°C pendant 20 min.

**Tableau 2**

| | | |
|---|---|---|
| Composition 1-MT1 | Elastomère (1A) | 50,0 |
| | Noir (2) | 1,9 |
| | Silice (3) | 27,5 |
| | Silane (4) | 2,2 |
| | DPG (5) | 0,6 |
| | Plastifiant (6) | 8,0 |
| | Cire anti-ozone (7) | 1,0 |
| | Anti-Oxydant (8) | 0,5 |
| | ZnO (9) | 1,3 |
| | Acide stéarique (10) | 1,00 |

**Tableau 3**

| | | |
|---|---|---|
| Composition 2-MT1 | Elastomère (1C) | 50,0 |
| | Noir (2) | 1,9 |
| | Silice (3) | 27,5 |
| | Silane (4) | 2,2 |
| | DPG (5) | 0,6 |
| | Plastifiant (6) | 8,0 |
| | Cire anti-ozone (7) | 1,0 |
| | Anti-Oxydant (8) | 0,5 |
| | ZnO (9) | 1,2 |
| | Acide stéarique (10) | 1,0 |

On prépare le mélange comparatif MT2 et le mélange MI1 de l'invention selon le procédé décrit pour le mélange comparatif MT1, avec respectivement les compositions C1 et C2 des tableaux 4 et 5 pour le mélange comparatif MT2 et les compositions C1 et C2 des tableaux 6 et 7 pour le mélange de l'invention MI1.

**Tableau 4**

| | | |
|---|---|---|
| Composition 1-MT2 | Elastomère (1B) | 40,0 |
| | Noir (2) | 3,8 |
| | Silice (3) | 39,7 |
| | Silane (4) | 3,2 |
| | DPG (5) | 0,6 |
| | Plastifiant (6) | 9,4 |
| | Cire anti-ozone (7) | 1,0 |
| | Anti-Oxydant (8) | 0,5 |
| | ZnO (9) | 1,0 |
| | Acide stéarique (10) | 0,8 |

**Tableau 5**

| | | |
|---|---|---|
| Composition 2-MT2 | Elastomère (1C) | 60,0 |
| | Noir (2) | 0,0 |
| | Silice (3) | 15,3 |
| | Silane (4) | 1,2 |
| | DPG (5) | 0,6 |
| | Plastifiant (6) | 6,6 |
| | Cire anti-ozone (7) | 1,0 |
| | Anti-Oxydant (8) | 0,5 |
| | ZnO (9) | 1,5 |
| | Acide stéarique (10) | 1,2 |

**Tableau 6**

| | | |
|---|---|---|
| Composition 1-MI1 | Elastomère (1A) | 60,0 |
| | Noir (2) | 0,0 |
| | Silice (3) | 15,3 |
| | Silane (4) | 1,2 |
| | DPG (5) | 0,6 |
| | Plastifiant (6) | 6,6 |
| | Cire anti-ozone (7) | 1,0 |
| | Anti-Oxydant (8) | 0,5 |
| | ZnO (9) | 1,5 |
| | Acide stéarique (10) | 1,2 |

**Tableau 7**

| | | |
|---|---|---|
| Composition 2-MI1 | Elastomère (1D) | 40,0 |
| | Noir (2) | 3,8 |
| | Silice (3) | 39,7 |
| | Silane (4) | 3,2 |
| | DPG (5) | 0,6 |
| | Plastifiant (6) | 9,4 |
| | Cire anti-ozone (7) | 1,0 |
| | Anti-Oxydant (8) | 0,5 |
| | ZnO (9) | 1,0 |
| | Acide stéarique (10) | 0,8 |

Les propriétés de caoutchouterie des mélanges MT1, MT2 et MI1, mesurées après cuisson, sont présentées dans le tableau 8.

**Tableau 8**

| | | MT1 | MT2 | MI1 |
|---|---|---|---|---|
| Température de transition vitreuse du mélange (mesurée en °C) | Tg1 | -24°C | -21°C | -27°C |
| | Tg2 | -57°C | -55°C | -59°C |
| Profil du facteur de perte | Largeur du pic à mi-hauteur | 24,5°C | 34,0°C | 21,5°C |
| tan δ_{max à 40°C} (en base 100) | | 100 | 98 | 116 |
| µₘₐₓ (en base 100) | | 100 | 86 | 105 |

Le mélange comparatif MT1 présente deux températures de transitions vitreuse, Tg1 et Tg2, indiquant la présence de deux compositions de caoutchouc différentes, une ayant une température de transition vitreuse dite de haute Tg (composition C1) et une ayant une température de transition vitreuse dite de basse Tg (composition C2). Il en est de même pour le second mélange comparatif MT2 et le mélange de l'invention MI1.

Bien que présentant la même quantité de charges renforçantes (58,80 pce), le mélange de l'invention MI1 se distingue des mélanges témoins MT1 et MT2 par un profil du facteur de perte mesuré sur un intervalle de température allant de -80°C à 60 °C à une fréquence de 10 Hz et à une contrainte constante de 0,7 MPa selon la norme ASTM D 5992 - 96 différent.

La largeur du pic à mi-hauteur du facteur de perte pour le mélange MI1 selon l'invention est plus étroit (21,5°C) que les largeurs à mi-hauteur des facteurs de perte pour les mélanges MT1 et MT2 (respectivement 24,5°C et 34,0°C). Cette valeur du pic à mi-hauteur étroite indique que les charges renforçantes du mélange ont une affinité préférentielle pour la composition ayant une Tg la plus basse, donc sont majoritairement réparties dans la composition ayant la Tg plus basse.

La largeur du pic à mi-hauteur du facteur de perte pour le mélange comparatif MT1 est de 24,4°C indiquant une répartition homogène des charges renforçantes entre les deux compositions du mélange MT1.

La largeur du pic à mi-hauteur du facteur de perte pour le mélange comparatif MT2 est de 34,0°C indiquant une répartition non homogène des charges renforçantes entre les deux compositions du mélange MT2, les charges renforçantes étant principalement réparties dans la composition de caoutchouc qui a la Tg la plus élevée.

Par rapport au mélange MT1 qui présente une répartition homogène de la charge renforçante dans ses deux compositions, le mélange MT2 présente, pour les propriétés hystériques équivalente (tan δ_{max à 40°C}), une diminution du coefficient µₘₐₓ, donc une diminution de la performance d'adhérence sur sol mouillé. Ainsi, lorsque la charge renforçante est localisée majoritairement dans la composition de caoutchouc de plus haute Tg, on observe donc une dégradation de la performance d'adhérence sur sol mouillé pour des propriétés d'hystérèse équivalentes au mélange MT1.

De manière surprenante lorsque les charges renforçantes sont majoritairement localisées dans la composition de caoutchouc ayant la Tg la plus basse (voir mélange MI1 selon l'invention), on observe, par rapport au mélange témoin MT1, une amélioration des propriétés d'hystérèse ainsi qu'une augmentation du coefficient µₘₐₓ, donc une amélioration de la performance d'adhérence sur sol mouillé.

### 3. Essai 2 : Impact de la différence de température de transition vitreuse des compositions formant le mélange de caoutchouc

Les exemples présentés dans le tableau 9 ont pour but de comparer les différentes propriétés de caoutchouterie du mélange de caoutchouc MI1 conforme à l'invention par rapport à deux mélanges comparatif MT3 et TM4.

Les mélanges MT3 et MT4 ont été réalisés de manière à ce que les compositions de caoutchouc les constituants présentent une différence de température de transition vitreuse inférieure à 23°C.

En outre, la composition de caoutchouc de plus haute Tg constituant le mélange MT3 présente la même formulation que la composition de caoutchouc de plus haute Tg constituant le mélange de l'invention ML1.

Par ailleurs, la composition de caoutchouc de plus basse Tg constituant le mélange MT4 présente la même formulation que la composition de caoutchouc de plus basse Tg constituant le mélange de l'invention ML1

Le tableau 9 présente la formulation des mélanges de caoutchouc testés, les proportions sont exprimées en pce c'est-à-dire en partie en poids pour 100 parties en poids des élastomères du mélange.

**Tableau 9**

| | MT3 | MT4 | MI1 |
|---|---|---|---|
| Elastomère (1A) | 60,0 | 0,0 | 60,0 |
| Elastomère (1D) | 0,0 | 40,0 | 40,0 |
| Elastomère (1F) | 40,0 | 0,0 | 0,0 |
| Elastomère (1G) | 0,0 | 60,0 | 0,0 |
| Noir (2) | 3,8 | 3,8 | 3,8 |
| Silice (3) | 55,0 | 55,0 | 55,0 |
| Silane (4) | 4,4 | 4,4 | 4,4 |
| DPG (5) | 1,2 | 1,2 | 1,2 |
| Plastifiant (6) | 16,0 | 16,0 | 16,0 |
| Cire anti-ozone (7) | 2,0 | 2,0 | 2,0 |
| Anti-Oxydant (8) | 1,0 | 1,0 | 1,0 |
| ZnO (9) | 2,5 | 2,5 | 2,5 |
| Acide stéarique (10) | 2,0 | 2,0 | 2,0 |
| Soufre | 1,8 | 1,8 | 1,8 |
| CBS | 2,2 | 2,2 | 2,2 |

On prépare le mélange MT3 et le mélange MT4 suivant le même procédé décrit à l'essai 1 avec respectivement les compositions du tableau 6 (composition 1-MI1) et du tableau 10 pour le mélange MT3 et les compositions du tableau 11 et du tableau 7 pour le mélange MT4 (composition 2-MI1).

**Tableau 10**

| | | |
|---|---|---|
| Composition 2-MT4 | Elastomère (1F) | 40,0 |
| | Noir (2) | 3,8 |
| | Silice (3) | 39,7 |
| | Silane (4) | 3,2 |
| | DPG (5) | 0,6 |
| | Plastifiant (6) | 9,4 |
| | Cire anti-ozone (7) | 1,0 |
| | Anti-Oxydant (8) | 0,5 |
| | ZnO (9) | 1,0 |
| | Acide stéarique (10) | 0,8 |

**Tableau 11**

| | | |
|---|---|---|
| Composition 1-MT5 | Elastomère (1G) | 60,0 |
| | Noir (2) | 0,0 |
| | Silice (3) | 15,3 |
| | Silane (4) | 1,2 |
| | DPG (5) | 0,6 |
| | Plastifiant (6) | 6,6 |
| | Cire anti-ozone (7) | 1,0 |
| | Anti-Oxydant (8) | 0,5 |
| | ZnO (9) | 1,5 |
| | Acide stéarique (10) | 1,2 |

Les propriétés de caoutchouterie de ces mélanges, mesurées après cuisson, sont présentées dans le tableau 12 et 13.

**Tableau 12**

| | | MT3 | MI1 |
|---|---|---|---|
| Température de transition vitreuse du mélange (mesurée en °C) | Tg1 | -27°C | -27°C |
| | Tg2 | -39°C | -59°C |
| Profil du facteur de perte | Largeur du pic à mi-hauteur | 23,0°C | 21,5°C |
| tan δ_{max à 40°C} (en base 100) | | 100 | 117 |
| µₘₐₓ (en base 100) | | 100 | 100 |

Le mélange comparatif MT3 présente deux températures de transitions vitreuse Tg1 et Tg2 indiquant qu'il y a deux compositions de caoutchouc différentes dans le mélange.

Lorsque l'on modifie la formulation du mélange MT3 de manière à ce que la composition de caoutchouc de plus basse Tg (composition C2) présente une différence de température de transition vitreuse avec la composition de plus haute Tg (composition C1) de 23°C ou plus pour obtenir le mélange selon l'invention MI1, on constate que les propriétés d'hystérèse sont significativement améliorées pour le mélange de caoutchouc MI1 par rapport au mélange MT3. De manière surprenante, cette amélioration des propriétés d'hystérèse du mélange MI1 selon l'invention ne s'effectue pas au détriment du coefficient µₘₐₓ, donc de la performance d'adhérence sur sol mouillé.

**Tableau 13**

| | | MT4 | MI1 |
|---|---|---|---|
| Température de transition vitreuse du mélange (mesurée en °C) | Tg1 | -51°C* | -27°C |
| | Tg2 | -51°C* | -59°C |
| Profil du facteur de perte | Largeur du pic à mi-hauteur | 22,5°C | 21,5°C |
| tan δ max à 40°C (en base 100) | | 100 | 98 |
| µₘₐₓ (en base 100) | | 100 | 119 |

| | | | |
|---|---|---|---|
| (*) Le mélange MT4 présente une seule valeur de température de transition vitreuse ; cette température de transition vitreuse mesurée selon la norme NF EN ISO 11357-2 :05-2014 est égale à -51°C. Or, d'après les calculs théoriques, le mélange de caoutchouc MT4 aurait dû présenter deux températures de transition vitreuse distinctes. La température de transition vitreuse théorique, obtenue par calcul, pour la composition C1-MT4 est de -40°C et la température de transition vitreuse théorique, obtenue par calcul pour la composition C2-MT4 est de -49°C, et donc une différence de Tg1_{calculé}-Tg2_{calculé} = -9°C. | | | |

Lorsque l'on modifie la formulation du mélange MT4 de manière à ce que la composition de caoutchouc de plus haute Tg présente une différence de température de transition vitreuse avec la composition de basse Tg de 23°C ou plus pour obtenir le mélange selon l'invention MI1, on observe que le coefficient µₘₐₓ est significativement amélioré par rapport au mélange MT4. De manière surprenante, l'amélioration de la performance d'adhérence sur sol mouillé ne s'effectue pas au détriment des propriétés d'hystérèse qui restent équivalentes à celles du mélange MT4 comparatif.

### 4. Essai 3 : Comparaison avec un art antérieur

Les exemples présentés dans le tableau 14 ont pour but de comparer les différentes propriétés de caoutchouterie du mélange de caoutchouc MI1 conforme à l'invention par rapport à un mélange comparatif MT5 représentatif de l'exemple 4 du document EP3372638A1

La formulation du mélange MT5 est présentée dans le tableau 14, les proportions sont exprimées en pce.

**Tableau 14**

| | MT5 |
|---|---|
| Elastomère (1F) | 50,0 |
| Elastomère (1D) | 50,0 |
| Noir (2) | 3,8 |
| Silice (3) | 55,0 |
| Silane (4) | 4,4 |
| DPG (5) | 1,2 |
| Plastifiant (6) | 16,0 |
| Cire anti-ozone (7) | 2,0 |
| Anti-Oxydant (8) | 1,0 |
| ZnO (9) | 2,5 |
| Acide stéarique (10) | 2,0 |
| Soufre | 1,8 |

On prépare le mélange MT5 suivant le même procédé décrit dans l'essai 1 avec respectivement les compositions des tableaux 15 et 16.

**Tableau 15**

| | | |
|---|---|---|
| Composition 1-MT5 | Elastomère (1F) | 50,0 |
| | Noir (2) | 1,9 |
| | Silice (3) | 0,0 |
| | Silane (4) | 0,0 |
| | DPG (5) | 0,6 |
| | Plastifiant (6) | 0,0 |
| | Cire anti-ozone (7) | 1,0 |
| | Anti-Oxydant (8) | 0,5 |
| | ZnO (9) | 1,3 |
| | Acide stéarique (10) | 1,0 |

**Tableau 16**

| | | |
|---|---|---|
| Composition 2-MT5 | Elastomère (1D) | 50,0 |
| | Noir (2) | 1,9 |
| | Silice (3) | 55,0 |
| | Silane (4) | 4,4 |
| | DPG (5) | 0,6 |
| | Plastifiant (6) | 16,0 |
| | Cire anti-ozone (7) | 1,0 |
| | Anti-Oxydant (8) | 0,5 |
| | ZnO (9) | 1,2 |
| | Acide stéarique (10) | 1,0 |

Les propriétés de caoutchouterie de ces mélanges, mesurées après cuisson, sont présentées dans le tableau 17.

**Tableau 17**

| | | MT5 | MI1 |
|---|---|---|---|
| Température de transition vitreuse du mélange (mesurée en °C) | Tg1 | -43°C | -27°C |
| | Tg2 | -57°C | -59°C |
| Profil du facteur de perte | Largeur du pic à mi-hauteur | 21,0°C | 21,5°C |
| tan δ_{max à 40°C} (en base 100) | | 100 | 99 |
| µₘₐₓ (en base 100) | | 100 | 127 |

On constate que le mélange selon l'invention MI1, présente un coefficient µₘₐₓ significativement amélioré par rapport au mélange MT5 représentatif d'un art antérieur. De manière surprenante, cette amélioration significative ne s'effectue pas au détriment des propriétés d'hystérèse puis que les deux mélanges présentent les mêmes valeurs de tan δₘₐₓ à 40°C.

## Revendications

1. Mélange de caoutchouc présentant au moins deux températures de transition vitreuse Tg, notées Tg1 et Tg2, et à base d'au moins deux compositions de caoutchouc notées C1 et C2, la composition de caoutchouc C1 comprenant au moins un élastomère E1, et présentant la température de transition vitreuse Tg1, la composition C2 comprenant au moins un élastomère E2 et une charge renforçante, l'élastomère E2 étant différent de l'élastomère E1, et présentant la température de transition vitreuse Tg2, **caractérisé en ce que** :
- la température de transition vitreuse Tg1 de la composition C1 est supérieure ou égale à -50°C,
- le mélange de caoutchouc satisfait la relation mathématique Tg1 -Tg2 ≥ 23°C,
- le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C; et
- l'élastomère E1 est majoritaire dans le mélange de caoutchouc.

2. Mélange de caoutchouc selon la revendication 1, dans lequel le mélange de caoutchouc satisfait la relation mathématique Tg1 -Tg2 ≥ 25°C, de préférence Tg1 -Tg2 ≥ 28°C, plus préférentiellement encore Tg1 -Tg2 ≥ 30°C.

3. Mélange de caoutchouc selon la revendication 2, dans lequel le mélange de caoutchouc satisfait la relation mathématique 25°C ≤Tg1 -Tg2 ≤ 40°C, de préférence 28°C ≤Tg1 -Tg2 ≤ 35°C, plus préférentiellement 28°C ≤Tg1 -Tg2 ≤ 34°C.

4. Mélange de caoutchouc selon l'une quelconque des revendications précédentes, dans lequel la température de transition vitreuse Tg1 de la composition de caoutchouc C1 est supérieure ou égale à -48°C, de préférence supérieure ou égale à -40°C.

5. Mélange de caoutchouc selon l'une quelconque des revendications précédentes, dans lequel la température de transition vitreuse Tg1 de la composition de caoutchouc C1 est comprise dans un domaine allant de -48°C à -15°C, plus préférentiellement allant de -40°C à -15°C.

6. Mélange de caoutchouc selon l'une quelconque des revendications précédentes, dans lequel la température de transition vitreuse Tg2 de la composition C2 est inférieure ou égale à -43°C, de préférence inférieure ou égale à -50°C, plus préférentiellement encore inférieure ou égale à -57°C.

7. Mélange de caoutchouc selon l'une quelconque des revendications précédentes, dans lequel la température de transition vitreuse Tg2 de la composition C2 est comprise dans un domaine allant de -90°C à -43°C, de préférence allant de -85°C à -50°C.

8. Mélange de caoutchouc selon l'une quelconque des revendications précédentes, dans lequel l'élastomère de la composition de caoutchouc C1 est un élastomère diénique.

9. Mélange de caoutchouc selon l'une quelconque des revendications précédentes, dans lequel l'élastomère E1 de la composition de caoutchouc C1 est un élastomère diénique choisi dans le groupe constitué par le caoutchouc naturel, les polyisoprènes de synthèse, les polybutadiènes, les copolymères de butadiène et de styrène, les copolymères de butadiène et d'isoprène, les copolymères d'isoprène et de styrène et les copolymères de butadiène-styrène-isoprène

10. Mélange de caoutchouc selon l'une quelconque des revendications précédentes, dans lequel la composition C1 peut comprendre en outre une charge renforçante.

11. Mélange de caoutchouc selon l'une quelconque des revendications précédentes, dans lequel l'élastomère E2 de la composition de caoutchouc C2 est un élastomère diénique, de préférence est un élastomère fonctionnalisé.

12. Mélange de caoutchouc selon l'une quelconque des revendications précédentes, dans lequel l'élastomère E2 de la composition de caoutchouc C2 est un élastomère diénique, de préférence fonctionnalisé, choisi dans le groupe constitué par le caoutchouc naturel, les polyisoprènes de synthèse, les polybutadiènes, les copolymères de butadiène et de styrène, les copolymères d'isobutène et d'isoprène, les copolymères de butadiène et d'isoprène, les copolymères d'isoprène et styrène et les copolymères de butadiène-styrène-isoprène.

13. Mélange de caoutchouc selon l'une quelconque des revendications précédentes, dans lequel la charge renforçante de la composition C2 comprend majoritairement au moins une charge renforçante inorganique, plus préférentiellement comprend majoritairement au moins une silice.

14. Bande de roulement comprenant au moins un mélange défini selon l'une quelconque des revendications 1 à 13.

15. Pneumatique comprenant au moins un mélange défini selon l'une quelconque des revendications 1 à 13 ou une bande de roulement selon la revendication 14.

## Patentansprüche

1. Kautschukmischung mit mindestens zwei Glasübergangstemperaturen Tg, die als Tg1 und Tg2 bezeichnet werden, und auf Basis von mindestens zwei Kautschukzusammensetzungen, die als C1 und C2 bezeichnet werden, wobei die Kautschukzusammensetzung C1 mindestens ein Elastomer E1 umfasst und die Glasübergangstemperatur Tg1 aufweist, wobei die Zusammensetzung C2 mindestens ein Elastomer E2 und einen verstärkenden Füllstoff umfasst, wobei das Elastomer E2 von dem Elastomer E1 verschieden ist, und die Glasübergangstemperatur Tg2 aufweist, **dadurch gekennzeichnet, dass**:
- die Glasübergangstemperatur Tg1 der Zusammensetzung C1 größer oder gleich -50 °C ist,
- die Kautschukmischung die mathematische Beziehung Tg1-Tg2 ≥ 23 °C erfüllt,
- die Kautschukmischung ein Verlustfaktorprofil hat, das den Verlauf von tan δ als Funktion der Temperatur in °C zeigt, wobei das Verlustfaktorprofil in einem Temperaturintervall im Bereich von -80 °C bis 60 °C bei einer Frequenz von 10 Hz und einer konstanten Spannung von 0,7 MPa gemessen wird und einen oder mehrere Peaks aufweist, wobei dieses Profil derart beschaffen ist, dass alle Peaks von tan δ, die bei einer Temperatur über der Glasübergangstemperatur Tg1 vorhanden sind, eine Halbwertsbreite kleiner oder gleich 23 °C aufweisen; und
- das Elastomer E1 in der Kautschukmischung überwiegt.

2. Kautschukmischung nach Anspruch 1, wobei die Kautschukmischung die mathematische Beziehung Tg1-Tg2 ≥ 25 °C, vorzugsweise Tg1-Tg2 ≥ 28 °C, noch weiter bevorzugt Tg1-Tg2 ≥ 30 °C, erfüllt.

3. Kautschukmischung nach Anspruch 2, wobei die Kautschukmischung die mathematische Beziehung 25 °C ≤Tg1-Tg2 ≤ 40 °C, vorzugsweise 28 °C ≤Tg1-Tg2 ≤ 35 °C, weiter bevorzugt 28 °C ≤Tg1-Tg2 ≤ 34 °C, erfüllt.

4. Kautschukmischung nach einem der vorhergehenden Ansprüche, wobei die Glasübergangstemperatur Tg1 der Kautschukzusammensetzung C1 größer oder gleich -48 °C, vorzugsweise größer oder gleich -40 °C, ist.

5. Kautschukmischung nach einem der vorhergehenden Ansprüche, wobei die Glasübergangstemperatur Tg1 der Kautschukzusammensetzung C1 in einem Bereich von -48 °C bis -15 °C, weiter bevorzugt von -40 °C bis -15 °C, liegt.

6. Kautschukmischung nach einem der vorhergehenden Ansprüche, wobei die Glasübergangstemperatur Tg2 der Zusammensetzung C2 kleiner oder gleich -43 °C, vorzugsweise kleiner oder gleich -50 °C, noch weiter bevorzugt kleiner oder gleich -57 °C, ist.

7. Kautschukmischung nach einem der vorhergehenden Ansprüche, wobei die Glasübergangstemperatur Tg2 der Zusammensetzung C2 in einem Bereich von -90 °C bis -43 °C, vorzugsweise von -85 °C bis -50 °C, liegt.

8. Kautschukmischung nach einem der vorhergehenden Ansprüche, wobei es sich bei dem Elastomer der Kautschukzusammensetzung C1 um ein Dienelastomer handelt.

9. Kautschukmischung nach einem der vorhergehenden Ansprüche, wobei es sich bei dem Elastomer E1 der Kautschukzusammensetzung C1 um ein Dienelastomer handelt, das aus der Gruppe bestehend aus Naturkautschuk, synthetischen Polyisoprenen, Polybutadienen, Butadien-Styrol-Copolymeren, Butadien-Isopren-Copolymeren, Isopren-Styrol-Copolymeren und Butadien-Styrol-Isopren-Copolymeren ausgewählt ist.

10. Kautschukmischung nach einem der vorhergehenden Ansprüche, wobei die Zusammensetzung C1 außerdem einen verstärkenden Füllstoff umfassen kann.

11. Kautschukmischung nach einem der vorhergehenden Ansprüche, wobei es sich bei dem Elastomer E2 der Kautschukzusammensetzung C2 um ein Dienelastomer, vorzugsweise ein funktionalisiertes Elastomer, handelt.

12. Kautschukmischung nach einem der vorhergehenden Ansprüche, wobei es sich bei dem Elastomer E2 der Kautschukzusammensetzung C2 um ein vorzugsweise funktionalisiertes Dienelastomer handelt, das aus der Gruppe bestehend aus Naturkautschuk, synthetischen Polyisoprenen, Polybutadienen, Butadien-Styrol-Copolymeren, Isobuten-Isopren-Copolymeren, Butadien-Isopren-Copolymeren, Isopren-Styrol-Copolymeren und Butadien-Styrol-Isopren-Copolymeren ausgewählt ist.

13. Kautschukmischung nach einem der vorhergehenden Ansprüche, wobei der verstärkende Füllstoff der Zusammensetzung C2 überwiegend mindestens einen anorganischen verstärkenden Füllstoff umfasst und weiter bevorzugt überwiegend mindestens eine Kieselsäure umfasst.

14. Lauffläche, umfassend mindestens eine Mischung gemäß einem der Ansprüche 1 bis 13.

15. Reifen, umfassend mindestens eine Mischung gemäß einem der Ansprüche 1 bis 13 oder eine Lauffläche nach Anspruch 14.

## Claims

1. Rubber compound having at least two glass transition temperatures Tg, denoted Tg1 and Tg2, and based on at least two rubber compositions denoted C1 and C2, the rubber composition C1 comprising at least one elastomer E1, and having the glass transition temperature Tg1, the composition C2 comprising at least one elastomer E2 and a reinforcing filler, the elastomer E2 being different from the elastomer E1, and having the glass transition temperature Tg2, **characterized in that**:
- the glass transition temperature Tg1 of composition C1 is above or equal to -50°C,
- the rubber compound satisfies the mathematical relationship Tg1-Tg2 ≥ 23°C,
- the rubber compound has a loss factor profile exhibiting the change in tan δ as a function of the temperature in °C, the loss factor profile being measured over a temperature range extending from -80°C to 60°C at a frequency of 10 Hz and a constant stress of 0.7 MPa and exhibiting one or more peaks, this profile being such that all the tan δ peaks present at a temperature above the glass transition temperature Tg1 have a width at half height less than or equal to 23°C; and
- the elastomer E1 is predominant in the rubber compound.

2. Rubber compound according to Claim 1, in which the rubber compound satisfies the mathematical relationship Tg1-Tg2 ≥ 25°C, preferably Tg1-Tg2 ≥ 28°C, more preferentially still Tg1-Tg2 ≥ 30°C.

3. Rubber compound according to Claim 2, in which the rubber compound satisfies the mathematical relationship 25°C ≤ Tg1-Tg2 ≤ 40°C, preferably 28°C ≤ Tg1-Tg2 ≤ 35°C, more preferentially 28°C ≤ Tg1-Tg2 ≤ 34°C.

4. Rubber compound according to any one of the preceding claims, in which the glass transition temperature Tg1 of the rubber composition C1 is above or equal to -48°C, preferably above or equal to -40°C.

5. Rubber compound according to any one of the preceding claims, in which the glass transition temperature Tg1 of the rubber composition C1 is within a range extending from -48°C to -15°C, more preferentially extending from -40°C to -15°C.

6. Rubber compound according to any one of the preceding claims, in which the glass transition temperature Tg2 of the composition C2 is less than or equal to -43°C, preferably less than or equal to -50°C, more preferentially still less than or equal to -57°C.

7. Rubber compound according to any one of the preceding claims, in which the glass transition temperature Tg2 of the composition C2 is within a range extending from -90°C to -43°C, preferably extending from -85°C to -50°C.

8. Rubber compound according to any one of the preceding claims, in which the elastomer of the rubber composition C1 is a diene elastomer.

9. Rubber compound according to any one of the preceding claims, in which the elastomer E1 of the rubber composition C1 is a diene elastomer selected from the group consisting of natural rubber, synthetic polyisoprenes, polybutadienes, butadiene/styrene copolymers, butadiene/isoprene copolymers, isoprene/styrene copolymers and butadiene/styrene/isoprene copolymers.

10. Rubber compound according to any one of the preceding claims, in which composition C1 may further comprise a reinforcing filler.

11. Rubber compound according to any one of the preceding claims, in which the elastomer E2 of the rubber composition C2 is a diene elastomer, preferably is a functionalized elastomer.

12. Rubber compound according to any one of the preceding claims, in which the elastomer E2 of the rubber composition C2 is a diene elastomer, preferably which is functionalized, selected from the group consisting of natural rubber, synthetic polyisoprenes, polybutadienes, butadiene/styrene copolymers, isobutene/isoprene copolymers, butadiene/isoprene copolymers, isoprene/styrene copolymers and butadiene/styrene/isoprene copolymers.

13. Rubber compound according to any one of the preceding claims, in which the reinforcing filler of composition C2 predominantly comprises at least one inorganic reinforcing filler, more preferentially predominantly comprises at least one silica.

14. Tread comprising at least one compound defined according to any one of Claims 1 to 13.

15. Tyre comprising at least one compound defined according to any one of Claims 1 to 13 or a tread according to Claim 14.
